# EUROPEAN PATENT APPLICATION

(11) **EP 0 534 232 A1**
(43) Date of publication of application: **31.03.1993**
(21) Application number: 92115427.4
(22) Date of filing: 09.09.1992
(51) Int. Cl.: H04L 12/56, H04Q 3/68

(54) **An apparatus and method for connecting inter-SRM highways**

(30) Priority: 09.09.1991 JP 227747/91
(71) Applicant: FUJITSU LIMITED, Kawasaki-shi, Kanagawa 211 (JP)
(72) Inventor: Yoshimura, Shuji, c/o Fujitsu Limited, Kawasaki-shi, Kanagawa 211 (JP); Miyake, Hiroshi, c/o Fujitsu Limited, Kawasaki-shi, Kanagawa 211 (JP); Aso, Yasuhiro, c/o Fujitsu Limited, Kawasaki-shi, Kanagawa 211 (JP)
(74) Representative: Lehn, Werner, Dipl.-Ing.

(57) **Abstract**

A method and apparatus for connecting inter-SRM highways are used in a MSSR formed by arraying a plurality of SRM rows pursuant to a broadband ISDN system. The method inserts a connection module (6) between SRMs in each SRM row, has a plurality of horizontal highways 1) connecting an SRM (3) on the input side with an SRM 4) on the output side in each SRM row, provides a plurality of vertical highways (2) crossing the plurality of horizontal highways (1) and has a plurality of switches (5), provided at respective crossing points between horizontal highways and vertical highways, arbitrarily switching the connection of the horizontal highways (1) to the vertical highway (2).

## Description

### Background of the Invention

### Field of the Invention

This invention pertains to a highway connection between SRMs (Self Routing Modules), which are switching modules for a broadband ISDN system, more particularly to an apparatus and method for connecting inter-SRM highways for simplifying the switching of highway connections, when SRMs are added to an MSSR (Multi-stage Self-routing Unit) having SRMs connected in multiple stages.

An ATM (Asynchronous Transfer Mode) network for transmitting information in a broadband ISDN system has an SRM comprising a multiplicity of buffers switch the routes on which highway data flow in a form of cells.

It is desirable to allow an MSSR configured by multiple stages of SRMs to make as easy as possible the switching of inter-SRM highway connections, which is necessary in adding an SRM.

### Description of the Related Arts

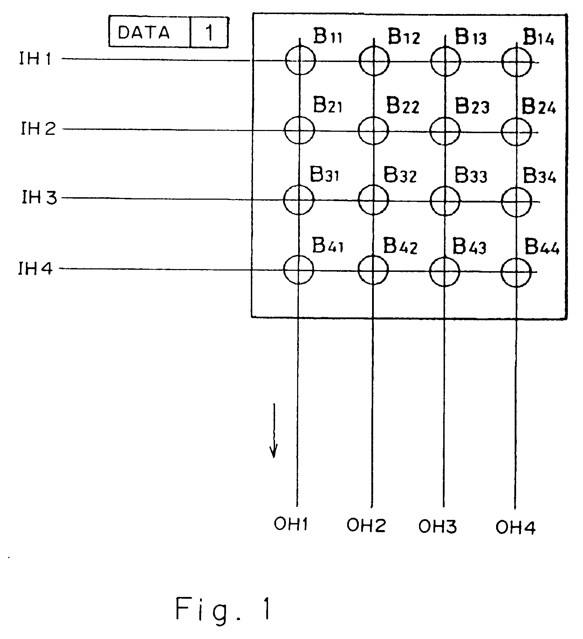

Figure 1 shows an exemplary SRM configuration. It shows as an example an SRM of a 4x4 unit. B₁₁ through B₁₄, B₂₁, through B₂₄, B₃₁ through B₃₄ and B₄₁ through B₄₄ are buffers, IH1 through IH4 are highways on the input side, and OH1 through OH4 are highways on the output side.

Highway data for use in an ATM network form a cell having a fixed length, e.g. of fifty-three [53] bytes, containing in its header, e.g. of five [5] bytes out of the fifty-three [53] bytes, identifiers indicating an output route, such as a VCI (Virtual Channel Identifier) for identifying the next output node of the cell and a VPI (Virtual Path Identifier) identifying the path of the cell within the current output node.

In Figure 1, because the pertinent one (VPI) of the identifiers in the header of a cell on a highway IH1 on the input side stores e.g. "1", the cell is supplied to buffer B₁₁ at the crossing point between highway IH1 and highway OH1 on the output side. The cell is read at a free timing of highway OH1 on the output side for its output. The other cases are similar.

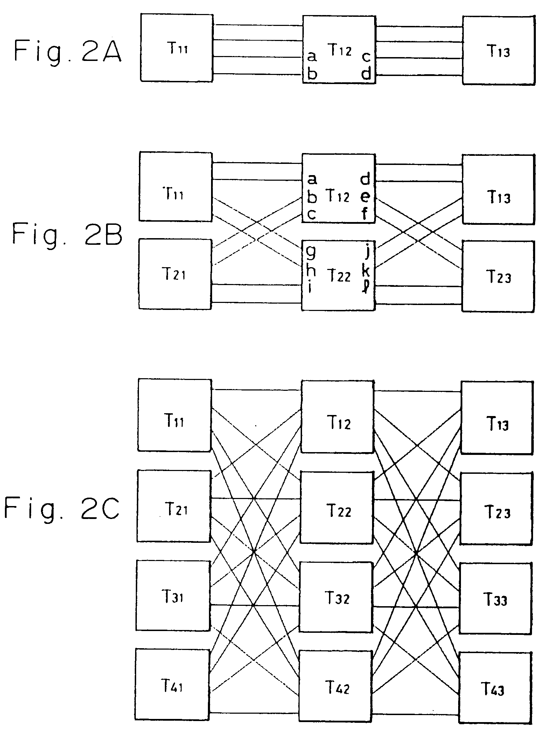

Figures 2A, 2B and 2C show exemplary configurations of conventional MSSRs. Figure 2A shows a case in which 4x4 SRMs T₁₁ through T₁₃ have a single row alignment. Figure 2B shows a case in which 4x4 SRMs T₁₁ through T₁₃ and T₂₁ through T₂₃ have a double row alignment forming an 8x8 switch. Figure 2C shows a case in which 4x4 SRMs T₁₁ through T₁₃, T₂₁ through T₂₃, T₃₁ through T₃₃ and T₄₁ through T₄₃ have a quadruple row alignment forming a 16x16 switch.

In Figure 2A, highway data pass through each of SRMs T₁₁ through T₁₃ sequentially e.g. from the left to the right.

In Figure 2B, a case is shown in which an 8x8 switch is configured by adding 4x4 SRMs T₂₁ through T₂₃ to 4x4 SRMs T₁₁ through T₁₃.

In this case, to enable all possible routes to be realized between already provided 4x4 SRMs T₁₁ through T₁₃ and newly added 4x4 SRMs T₂₁ through T₂₃, cross connections need to be made as shown in Figure 2B. Therefore, terminals a through d for 4x4 SRMs T₁₂ shown in Figure 2A must reconnect their highways.

In Figure 2C, a case is shown in which a single row alignment of 4x4 SRMs T₁₁ through T₁₃ shown in Figure 2A or a double row alignment of 4x4 SRMs T₁₁ through T₁₃ and T₂₁ through T₂₃ shown in Figure 2B is extended into a 16x16 switch.

In this case, to enable all possible routes to be realized between already provided 4x4 SRMs T₁₁ through T₁₃, or 4x4 SRMs T₁₁ through T₁₃ and T₂₁ through T₂₃, and a newly added row of 4x4 SRMs, cross connections need to be made as shown in Figure 2C. Therefore, terminals g through 1 in 4x4 SRMs T₂₂ shown in Figure 2B must reconnect their highways.

As such, a conventional system of connecting inter-SRM highways has a problem of being cumbersome in that already provided SRMs need to completely reconnect their highways.

Besides, a fact that each addition of an SRM row entails highway connections can invite an erroneous connection.

This invention purports to solve such a problem incidental to a prior art. It aims at providing an apparatus and method for connecting inter-SRM highways, allowing an SRM to be newly added to an already provided SRM by using a group of connection lines between stages of connection modules having the same configuration, and for minimizing an ill effect on an already provided device caused by adding an SRM.

### Summary of the Invention

This invention pertains to inter-SRM highway connections for a broadband ISDN system. It aims at simplifying a highway connection switching when an SRM is added to an MSSR.

An MSSR having a plurality of SRM rows comprises a connection module for each SRM row, a plurality of horizontal highways connecting in each row an SRM on the input side row with an SRM on the output side, a plurality of vertical highways crossing the horizontal highways, a plurality of switches provided at the crossing points of both highways and for arbitrarily switching the connections of horizontal highways with vertical highways, a group of interstage connection lines for sequentially connecting in a predetermined connecting sequence the output side of the vertical highways of each connection module with the input side of the vertical highways of a connection module in the next row, and a group of external connection lines for connecting the output side of the vertical highways of a connection module in the last row with the input side of the vertical highways of a connection module in the first row.

### Brief Description of the Drawings

One of skill in the art can easily understand additional features and objects of this invention from the description of the preferred embodiments and some of the attached drawings. In the drawings:
Figure 1 shows an exemplary configuration of an SRM;
Figures 2A, 2B and 2C shows an exemplary configuration of a conventional MSSR, where Figure 2A shows a case in which 4x4 SRMs T₁₁ through T₁₃ have a single row alignment, Figure 2B shows an 8x8 switch made of double row alignment by 4x4 SRMs T₁₁ through T₁₃ and T₂₁ through T₂₃, Figure 2C shows a 16x16 switch made of quadruple row alignment by 4x4 SRMs T₁₁ through T₁₃, T₂₁ through T₂₃, T₃₁ through T₃₃ and T₄₁ through T₄₃;
Figure 3 is a block diagram of this invention;
Figures 4A and 4B show an embodiment of this invention, where Figure 4A shows a single row alignment of 4x4 SRMs, and Figure 4B shows a double row alignment of 4x4 SRMs;
Figures 5A, 5B, 5C and 5D show connecting methods for switches. Figures 5A, 5B, 5C and 5D respectively show different connecting methods for two [2] switches S₁ and S₂.
Figure 6 shows an exemplary configuration of a switch;
Figure 7 shows another embodiment of this invention;
Figure 8 is a block diagram of a third embodiment of this invention;
Figure 9 is a block diagram of one of VCCs 15 shown in Figure 8;
Figure 10 is a block diagram for any of crossing point B₁₁ through B₄₄;
Figure 11A shows a data structure of an ATM cell handled by an ATM exchange;
Figure 11B shows a data structure of a tag part; and
Figure 12 is a block diagram showing additional subscriber lines 11 and 21 to the third embodiment of this invention.

### Description of the Preferred Embodiments

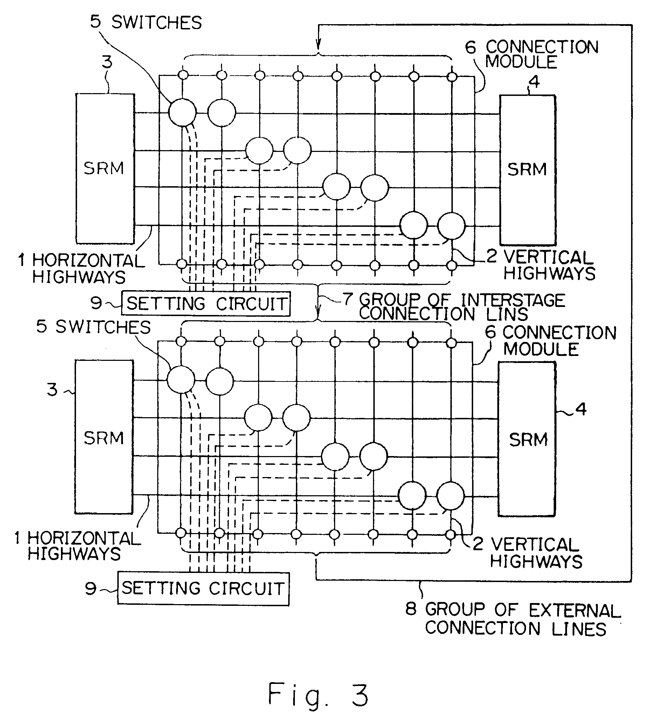

Figure 3 is a block diagram of this invention.

A method of this invention connects inter-SRM highways. The method is for use in a multi-stage SRM (MSSR) formed by arraying a plurality of self-routing module (SRM) rows pursuant to a broadband ISDN system. The method comprises
a step of inserting a connection module 6 between SRMs in each SRM row; a step of having a plurality of horizontal highways 1 connect an SRM 3 on the input side with an SRM 4 on the output side in each SRM row;
a step of providing a plurality of vertical highways 2 crossing the plurality of horizontal highways 1;
a step of having a plurality of switches 5, provided at respective crossing points between horizontal highways and vertical highways, switch the connection of a horizontal highway to an arbitrary vertical highway;
a step of providing a group of interstage connection lines 7 for connecting, in a predetermined connecting sequence, the output side of vertical highways of each connection module with the input side of horizontal highways of each connection module in the next row; and
a step of providing a group of external connection lines 8 for having the output side of vertical highways of the connection module in the last row of the MSSR connected, under control by a setting circuit 9, with the input side of vertical highways of the connection module in the first row.

An apparatus of this invention connects inter-SRM highways. The apparatus is for use in an MSSR formed by arraying a plurality of SRM rows pursuant to a broadband ISDN system. The apparatus comprises a connection module 6, a group of interstage connection lines 7 and a group of external connection lines 8.

The connection module 6, provided at each SRM row, has N horizontal highways 1 for connecting an SRM 3 on the input side of each SRM row with an SRM 4 on the output side, 2N vertical highways 2 crossing the horizontal highways 1, and 2N switches 5 each for switching the connection of a horizontal highway with an arbitrary vertical highway.

The group of interstage connection lines 7 connects, in a predetermined connecting sequence, the output side of the vertical highways of a connection module with the input side of the vertical highways of the connection module in the next row.

The group of external connection lines 8 connects the output side of the vertical highways of a connection module of the last row of the MSSR with the input side of the vertical highways of a connection module of the first row.

In addition to the above features, this invention can be further characterized in that each of the switches 5 comprises two [2] selectors S_{A} and S_{B}, under control by an external signal or being semi-fixed, for generating an output of 1 or 2 by arbitrarily switching between two [2] inputs.

In this invention, by providing a connection module 6 in each SRM row, a plurality of horizontal highways 1 of each SRM row connect the SRM 3 on the input side with the SRM 4 on the output side; and by providing a plurality of vertical highways 2 crossing the horizontal highways 1, a plurality of switches 5 provided at respective crossing points between horizontal highways and vertical highways arbitrarily switch the connections of horizontal highways to vertical highways.

By providing a group of interstage connection lines 7, the output side of the vertical highways of each connection module is connected with the input side of the vertical highways of the connection module in the next row in a predetermined connecting sequence; and by providing a group of external connection lines 8, the output side of the vertical highways of the connection module in the last row of an MSSR is connected with the input side of the vertical highways of the connection module in the first row.

Hence, this invention allows, through a use of the connection lines between stages and connection modules of the same configuration, an SRM to be added just by setting the switching method for each switch in a connection module and by setting the connecting method for connection lines between an SRM in the first row and an SRM in the last row, when an MSSR is formed by adding an SRM to an already provided SRM.

In this case, each of the switches 5 may have its switching controlled by an external control signal or partially fixed, and comprise two [2] selectors S_{A} and S_{B} for generating an output 1 or 2 by arbitrarily switching between two [2] inputs.

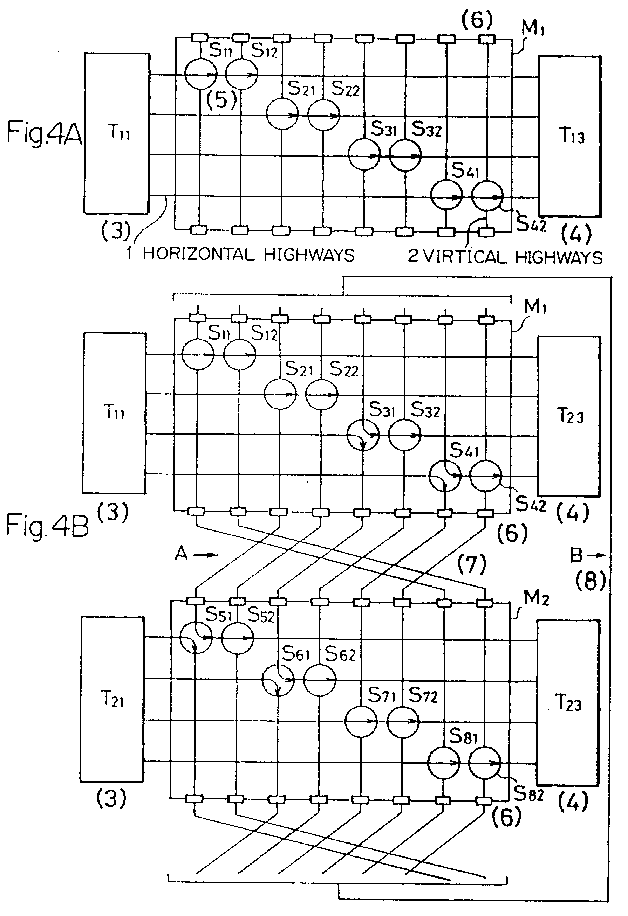

Figures 4A and 4B show an embodiment of this invention, in which Figure 4a shows a single row alignment of 4x4 SRMs, and Figure 4B shows a double row alignment of 4x4 SRMs. Parts shown in Figures 4A and 4B that are the same as those shown in Figures 2A, 2B and 2C have the same numbers. M₁ and M₂ are connection modules, and S₁₁, S₁₂, S₂₁, S₂₂, S₃₁, S₃₂, S₄₁, S₄₂, S₅₁, S₅₂, S₆₁, S₆₂, S₇₁, S₇₂, S₈₁ and S₈₂ are switches. 1 is horizontal highways, and 2 is vertical highways.

In Figure 4A, four [4] outputs from 4x4 SRM T₁₁ are supplied as four [4] inputs into 4x4 SRM T₁₃ via the horizontal highways 1 in connection module M₁. In connection module M₁, switches S₁₁, S₁₂, S₂₁, S₂₂, S₃₁, S₃₂, S₄₁, S₄₂ are connected only with the horizontal highways 1 and not with the vertical highways 2. Accordingly, the MSSR having a single row alignment of 4x4 SRMs shown in Figure 4A can perform the same highway switching as the MSSR shown in Figure 2A.

In Figure 4B , four [4] outputs from 4x4 SRM T₁₁ are supplied as four [4] inputs to 4x4 SRM T₁₃ via horizontal highways in connection module M₁, and four [4] outputs from 4x4 SRM T₂₁ are supplied as four [4] inputs to 4x4 SRM T₂₃ via horizontal highways in connection module M₂.

Switches S₁₁, S₁₂, S₂₁, S₂₂, S₃₁, S₃₂, S₄₁ and S₄₂ in connection module M₁ and switches S₅₁, S₅₂, S₆₁, S₆₂, S₇₁, S₇₂, S₈₁ and S₈₂ in connection module M₂ are in switch states respectively shown in Figure 4B. Also, the vertical highways of connection module M₁ are connected to the vertical highways of connection module M₂ by connection lines A sequentially shifted by two [2] lines in a horizontal direction, and the vertical highways of connection module M₂ are connected to the vertical highways of connection module M₁ by connection lines B.

A double row alignment of 4x4 SRMs shown in Figure 4B is formed by adding to a single row alignment shown in Figure 4A another single row alignment, connection lines A and connection lines B, and by changing the switching method of switches in a connection module from the switch state shown in Figure 4A.

Similar are cases in which four [4] or more stages can be configured by further adding 4x4 SRMs. By sequentially adding pairs each comprised of a single row alignment of 4x4 SRMs and connection lines A, and by adding connection lines B, 4X4 SRMs are formed in multiple stages.

As stated above, this invention has an MSSR formed by multiple stages of SRMs by using pairs, each having connection lines between stages and a connection module, of the same configuration connected in plural rows and by selecting the switching method of switches in the connection module, as well as by providing connection lines between SRMs in the first row and SRMs in the last row and by selecting their connecting method, thereby structuring an MSSR capable of executing necessary switching.

A frame of highway data of an embodiment shown in Figures 4A and 4B is structured by a total of twenty [20] bits, e.g. comprising a cell frame pulse bit indicating a cell head end, sixteen [16] bits of payload data, a parity bit, a "data enable" bit indicating an effectiveness or an ineffectiveness of a cell, and a clock bit.

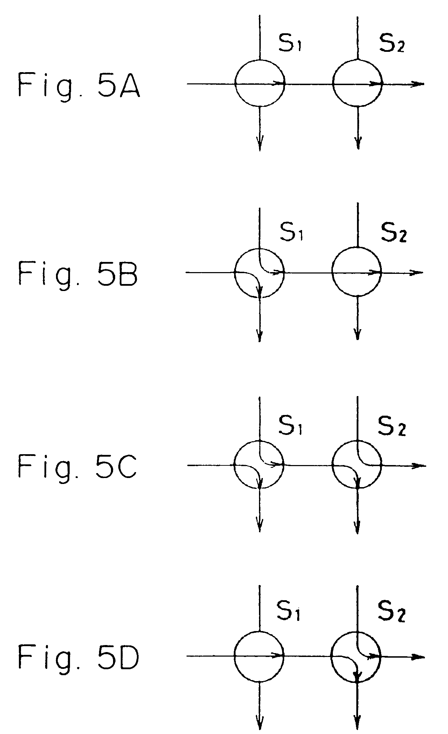

Figures 5A through 5D show methods for connecting switches. Each illustrates a different method for connecting two [2] switches S₁ and S₂. A circle indicating that a switch connects a highway in an arrow direction but does not connect a highway not passing through therein. The switches in connection modules M₁ and M₂ shown in Figures 4A and 4B are switched to be pursuant to any of the switching methods shown in Figures 5A through 5D. Switches shown in Figures 4A and 4B are aligned, such that their last suffix letters correspond to the switch numbers shown in Figures 5A through 5D. The connecting method shown in Figure 5C is not used.

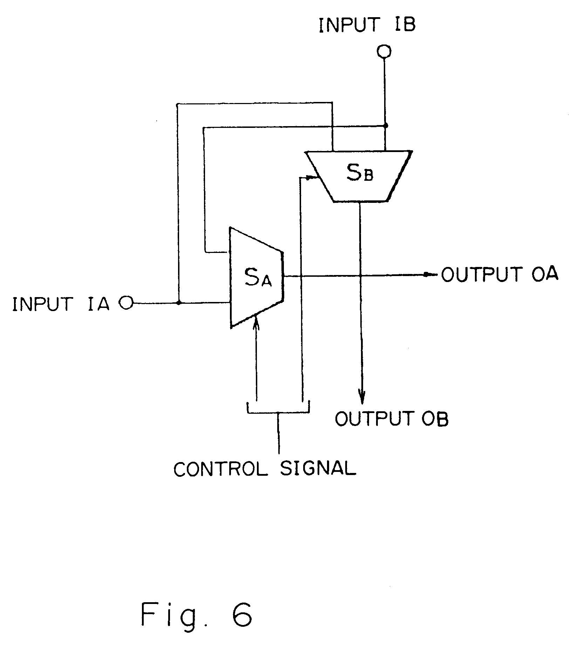

Figure 6 shows an exemplary configuration of a switch. S_{A} and S_{B} are selectors. The selector S_{A} and S_{B} can generate outputs OA and OB by arbitrarily switching inputs IA and IB.

One of the selectors S_{A} and S_{B} receives an input IA and the other one of them receives an input IB and selector S_{A} supplies an output OA to one of the horizontal highways 1 and selector S_{B} supplies an output OB to one of the vertical highways 2. The selectors S_{A} and S_{B} receive a control signal supplied from the setting circuit 9, which sets the connections shown in Figures 5A through 5D.

For example, a switch S₁ shown in Figure 5D has its selector S_{A} select input IA and supply the same as output OA to the corresponding one of the horizontal highways 1, whereas it has its selector S_{B} select no input and supply nothing as output OB to the corresponding one of the vertical highways 2. Also, a switch S₂ shown in Figure 5D has its selector S_{A} select input IB and supply the same as output OA to the corresponding one of the horizontal highways 1, whereas it has its selector S_{B} select input IA and supply the same as output OB to the corresponding one of the vertical highways 2.

The switch shown in Figure 6 may perform a switching by software based on office data e.g. according to an externally supplied control signal from the setting circuit 9 or may be a semi-fixed switch.

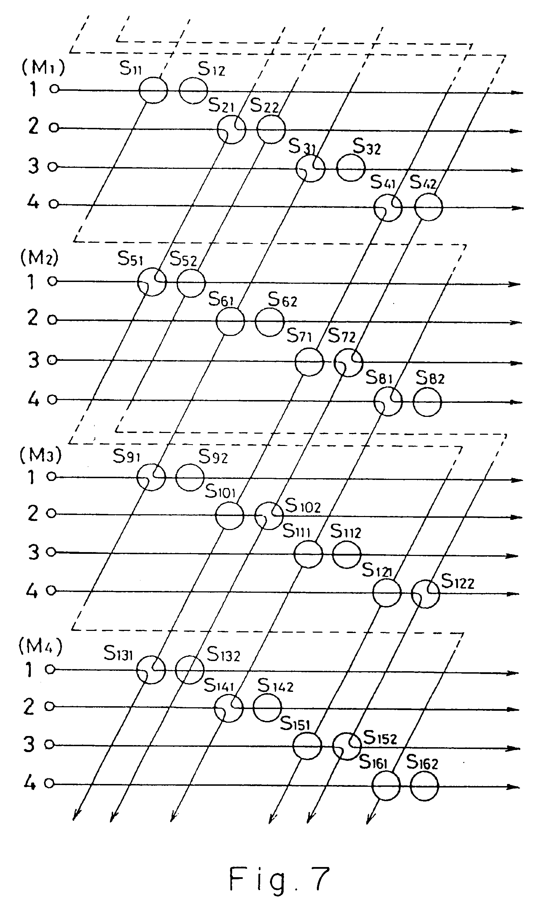

Figure 7 shows another embodiment of this invention. It shows a method for connecting highways of 4x4 SRMs in four [4] rows of connection modules. Parts shown in Figure 7 that are the same as those shown in Figures 4A and 4B have the same numbers. M₁ and M₂ are connection modules. S₉₁, S₉₂, S₁₀₁, S₁₀₂, S₁₁₁, S₁₁₂, S₁₂₁, S₁₂₂, switches S₁₃₁, S₁₃₂, S₁₄₁, S₁₄₂, S₁₅₁, S₁₅₂, S₁₆₁ and S₁₆₂ are switches.

In Figure 7, plural rows are connected by using interstage connection lines and connection modules M₁ through M₄ of the same configuration, and the switching methods of switches in respective connection modules are selected, the connection lines connecting the SRM in the first row and the SRM in the last row are provided, and their connecting method is selected, thereby making highway connections similar to those of the MSSR shown in Figure 2C. Although Figure 7 shows unconnected vertical highways in a simplified form, it goes without saying that all of them need to be provided, so that interstage connection lines and SRMs of the same configuration can be used.

Although embodiments shown in Figures 4 through 7 disclose cases in which this invention is applied to 4x4 SRMs, 8x8 SRMs can be similarly configured. In this case, the number of switches in a connection module is doubled. More specifically, the number of switches is dependent on the basic unit of SRMs forming a system.

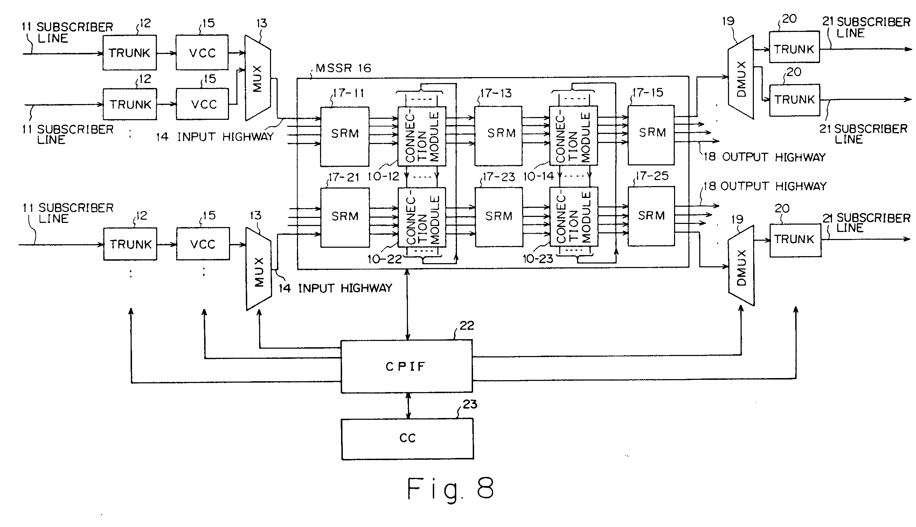

Figure 8 is a block diagram of a third embodiment of this invention.

Trunks 12 accommodate respective subscriber lines 11 on the input side, and connect them with VCCs (Virtual Channel Converters) 15. Based on call control information supplied via a CPIF (control device interface) 22 from a CC (central controller) 23 of an exchange, the VCCs 15 replace the original VCIs (Virtual Channel Identifiers), indicating the current output node (ATM exchange) as the destination of cells, attached to the headers of cells inputted from respective input highways 14 with the new VCIs indicating the next output nodes, and attach to the head ends of cells in a form of tags data over which paths in an MSSR 16 those cells are switched for their destined outputs to output highways 18.

The MSSR 16, which is a virtual communications part, receives outputs from the VCCs 15 multiplexed by MUXs (multiplexers) 13 over to input highways 14. The MSSR 16 comprises a plurality of SRMs 17 (17-11 through 17-25, which are the same as those shown in Figure 1) and connection modules 10 (10-12 through 10-24). Figure 8 shows an example of a 2x5 multiple stage configuration in which SRMs 17-11 and 17-21 form a first stage, connection modules 10-12 and 10-22 form a second stage, SRMs 17-13 and 17-23 form the third stage, connection modules 10-14 and 10-24 form a fourth stage and SRMs 17-15 and 17-25 form the fifth stage.

The MSSR 16 outputs cells via the output highways 18 respectively to DMUXs (demultiplexers) 19 to be demultiplexed for outputs via corresponding trunks 20 for outputs to subscriber lines 21 on the output side.

Although Figure 6 shows the configuration of a cell communications path part only in one [1] direction, it goes without saying that the communications path part for the cells in the reverse direction is configured in a same manner.

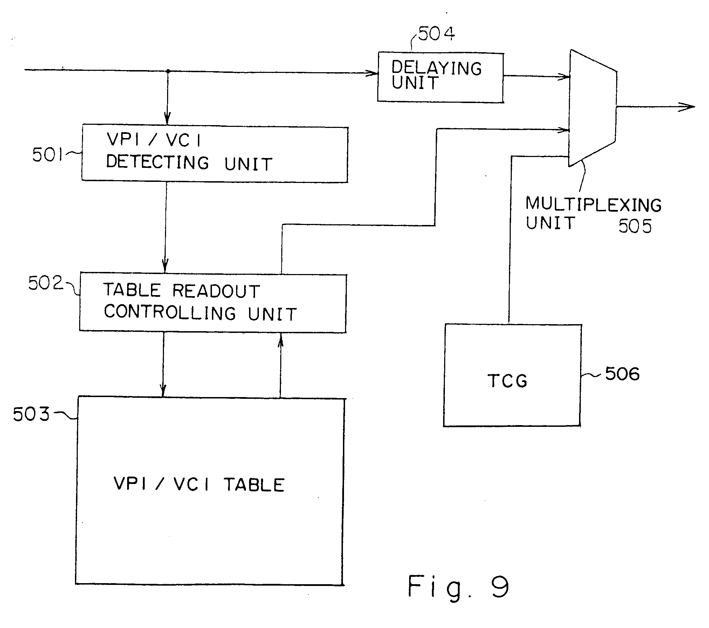

Figure 9 is a block diagram of one of the VCCs 15 shown in Figure 8.

A VPI/VCI detecting unit 501 detects a VPI (virtual path identifier) and a VCI (Virtual channel identifier) and a VPI (Virtual Path Identifier) in the header of a cell inputted from the corresponding one of the trunks 12. A table readout controlling unit 502 reads corresponding tag data from a VPI/VCI table 503 by using the detected VPI and VCI as an address. A multiplexing unit 505 adds to the head end of a cell delayed by a delaying unit 504 tag data read from a table readout controlling unit 502 for its output.

Here, the conversion table for obtaining tag data from the VPI and VCI stored in the VPI/VCI table 503 is set by the CC 23 via the CPIF 22. A test cell generating unit (TCG) 506 generates a test cell for testing the MSSR 16. The multiplexing unit 505 multiplexes the test cell over to a free time slots on input highways 14.

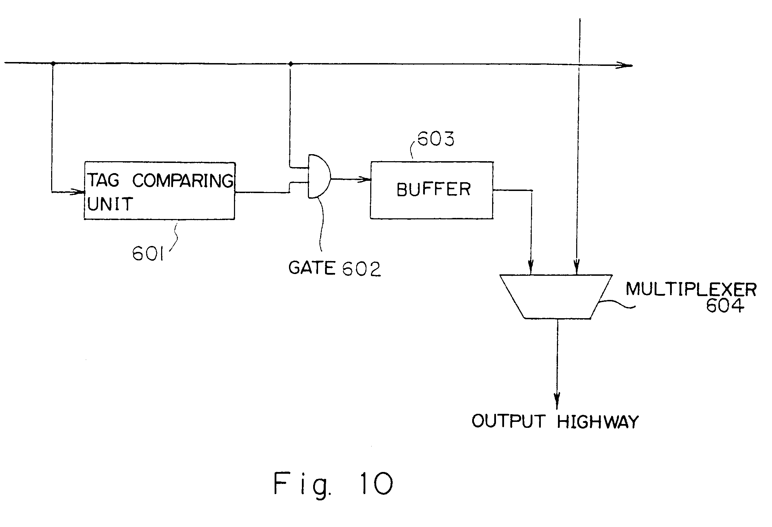

Figure 10 is a block diagram for any of crossing point B₁₁ through B₄₄.

A tag comparing unit 601 detects a tag attached to the head end of a cell inputted from an input line 401 and determines whether or not to switch the cell at the home crossing point. If it determines positively, it turns on a gate 602, and allow a buffer 603 to receive a cell inputted from an input highway after tag data. Then, a multiplexing unit 604 multiplexes a cell stored in a buffer 603 over to a free time slot on an output highway.

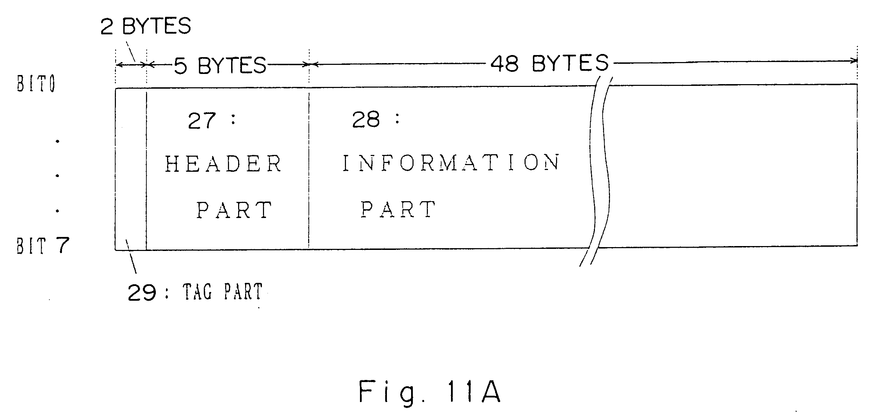

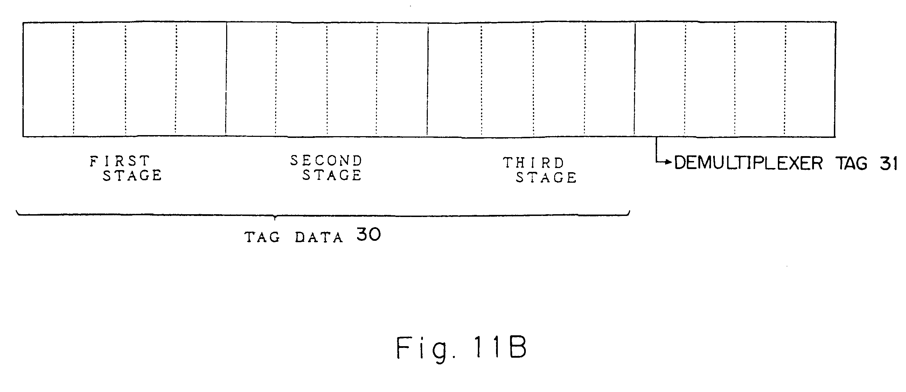

Figure 11A shows a data structure of an ATM cell handled by an ATM exchange, and Figure 11B shows a data structure of a tag part.

An ATM cell usually has the following data structure. As shown in Figure 11A, a cell has forty-eight [48] bytes of an information part 28 for storing payload communications data, and five [5] bytes of a header part 27 for storing destination data, e.g. VCI and VPI on the destination data for a receiving side subscriber, a CRC (cyclical redundancy check) code for correcting an error, data on a payload type of a cell, a cell loss priority data indicating the priority of discarding a cell in case of a congestion. An ATM cell additionally comprises within an MSSR 16 two [2] bytes of a tag part 29 for storing data indicating over which path in the MSSR 16 a cell is switched for their outputs to destined ones of the output highways 18. Each of the VCCs 15 shown in Figure 8 attaches the tag part 29 to a received ATM cell.

Figure 11B shows the configuration of the tag part 29. As shown in Figure 11B, the tag part 29 has three [3] stages of tag data 30 e.g. each of four [4] bits for having switches in the three [3] stages of the SRMs 17 in the MSSR 16. It also comprises four [4] bits of demultiplexer tag 31, which determines over which one of the subscriber lines 21 a cell inputted via one of the output highways 18 is to be outputted from a destined one of the DMUXs 19.

In accordance with the above description, an ATM exchange transfers a cell from one of the subscriber lines 11 on the input side to one of the subscriber lines on the output side. When an ATM exchange having such a configuration increases the number of subscriber lines 11 and 21, trunks 12' and 20', VCCs 15', MUX 13' and DMUX 19' are provided additionally in the number additions to the subscriber lines 11 and 21, as well as additional rows of SRMs 17 (17-31, 17-33 and 17-35 in this case) and connection modules 10 (10-32 and 10-34 in this case) in the MSSR 16.

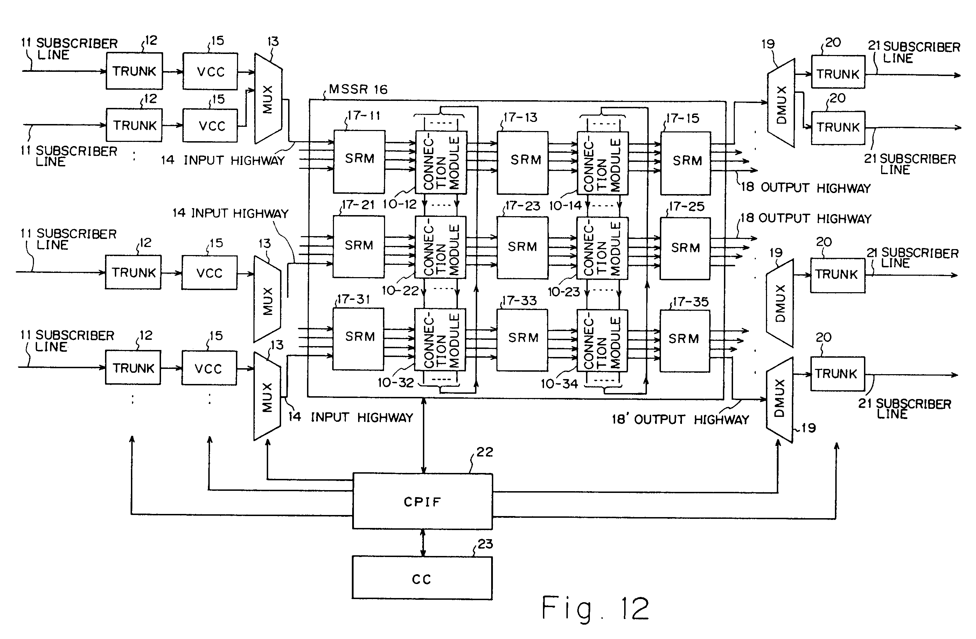

Figure 12 is a block diagram showing additional subscriber lines 11 and 21 to the third embodiment of this invention.

An increase in the number of subscriber lines 11 and 21 causes a mere addition of trunks 12' and 20', a VCC 15' a multiplexer 13' and a demultiplexer 19'.

Also, the MSSR 16 adds to a third row an SRM 17-31, a connection module 10-32, an SRM 17-33, a connection module 10-34 and an SRM 17-35 respectively in the first stage, the second stage, the third stage, the fourth stage and the fifth stage. When these additions are made, connection modules 10-12 through 10-24 are reset, and connection modules 10-32 and 10-34 are set, e.g. by changing the memory content of the CC 23. Although this is not shown in Figure 12, the CC 23, based on its memory content, controls the selectors S_{A} and S_{B} in each of the connection modules 10-12 through 10-34. Although conventionally, all connections needed to be changed by hardware configuration, as shown in Figure 12, this invention makes an additional hardware provision easier. Therefore, it is effective in preventing an erroneous connection from being generated. Also, an advance provision of a table by using a number of rows as a parameter will require only the number of rows to be set, which is effective in preventing a setting miss.

As described above, since this invention enables a use of interstage connection lines and connection modules of the same configuration to allow extra SRMs to be added to the existing SRMs, and an MSSR making desired highway connections to be structured simply by setting the switching method for switches in connection modules and the connecting method for connecting the connection lines between the SRMs in the first row and the SRMs in the last row. Therefore, this invention can minimize an effect on existing devices, when SRMs are added to an MSSR.

## Claims

1. A method for connecting inter-SRM highways, for use in a multi-stage SRM (hereafter abbreviated as MSSR) formed by arraying a plurality of self-routing module (hereafter abbreviated as SRM) rows pursuant to a broadband ISDN system, comprising:
a step of inserting a connection module (6) between SRMs in each SRM row;
a step of having a plurality of horizontal highways (1) connect an SRM (3) on the input side with an SRM (4) on the output side in each SRM row;
a step of providing a plurality of vertical highways (2) crossing said plurality of horizontal highways (1);
a step of having a plurality of switches (5), provided at respective crossing points between horizontal highways and vertical highways, arbitrarily switch the connection of said horizontal highways (1) to said vertical highway (2);
a step of providing a group of interstage connection lines (7) for connecting, in a predetermined connecting sequence, the output side of said vertical highways (2) of each connection module with the input side of said horizontal highways (1) of each connection module in the next row; and
a step of providing a group of external connection lines (8) for having the output side of said vertical highways (2) of the connection module in the last row of said MSSR connected with the input side of said vertical highways (2) of the connection module in the first row.

2. An apparatus for connecting inter-SRM highways, for use in an MSSR formed by arraying a plurality of SRM rows pursuant to a broadband ISDN system, comprising:
a connection module (6), provided at each SRM row, having
N horizontal highways (1) for connecting an SRM (3) on the input side of each SRM row with an SRM (4) on the output side,
2N vertical highways (2) crossing said horizontal highways (1), and
2N switches (5) each for switching the connection of a horizontal highway with an arbitrary vertical highway;
a group of interstage connection lines (7) for connecting, in a predetermined connecting sequence, the output side of the vertical highways (2) of a connection module with the input side of the vertical highways (2) of the connection module in the next row; and
a group of external connection lines (8) for connecting the output side of the vertical highways (2) of a connection module of the last row of said MSSR with the input side of the vertical highways (2) of a connection module of the first row.

3. The inter-SRM highway connecting apparatus according to claim 2, wherein:
each of said switches (5) comprises two [2] selectors (S_{A}, S_{B}), under control by an external signal, for generating an output 2 by arbitrarily switching between two [2] inputs.

4. The inter-SRM highway connecting apparatus according to claim 3, wherein said selectors (S_{A}, S_{B}) receive two [2] inputs for outputting either one [1] of said two [2] inputs or leaving both of them unconnected.

5. The inter-SRM highway connecting apparatus according to claim 2, wherein:
said switches (5) are provided in N rows in a group of two [2] for a row and one [1] for a stage.

6. The inter-SRM highway connecting apparatus according to claim 2, wherein:
said each SRM row comprises three [3] SRMs (17-11, 17-13 and 17-15, as well as 17-21, 17-23 and 17-25) and two [2] switches (10-12 and 10-14, as well as 10-22 and 10-24).

7. The inter-SRM highway connecting apparatus according to claim 2, wherein:
a control signal outputted from a setting circuit (9) controls its switching.

8. The inter-SRM highway connecting apparatus according to claim 7, wherein:
said setting circuit is a central controller (23) of an exchange and that said control signal is supplied to said switches (5) via a control device interface (22).

9. The inter-SRM highway connecting apparatus according to claim 2, wherein:
said switches 5 is switched to be set by a switch in a semi-fixed manner.

10. The inter-SRM highway connecting method according to claim 2, wherein:
said group of inter-stage connection lines (7) connects two [2] of said vertical highways (2) on the input side with two [2] of said vertical highways (2) on the output side in the next stage and the remaining six [6] of said vertical highways (2) with the input side in the next stage by sequentially shifting by two [2].

11. The inter-SRM highway connecting method according to claim 2, wherein:
said group of external connection lines (8) connects two [2] of said vertical highways (2) on the input side in the final stage with two [2] of said vertical highways (2) on the output side in the first stage and the remaining six [6] of said vertical highways (2) on the input side in the final stage with the input side in the first stage by sequentially shifting by [2].

12. The inter-SRM highway connecting method according to claim 2, wherein:
a control signal of said switches (5) is predetermined by the number of SRMs (6, 17); and
said control signal is set by specifying the number of rows to be added.
